# EUROPÄISCHE PATENTSCHRIFT

(11) **EP 0 875 771 B1**
(45) Veröffentlichungstag und Bekanntmachung des Hinweises auf die Patenterteilung: **14.07.2004**
(21) Anmeldenummer: 98107139.2
(22) Anmeldetag: 20.04.1998
(51) Int. Cl.: G01S 7/486

(54) **Opto-elektronische Sensoranordnung mit mehreren in einer Zeile oder einem Array angeordneten photoempfindlichen Elementen**
Opto-electronic sensor with multiple photosensitive elements arranged in a row or array
Senseur opto-électronique avec des éléments photosensibles arangés en ligne ou matrice

(30) Priorität: 30.04.1997 DE 19718389; 27.06.1997 DE 19727459
(43) Veröffentlichungstag der Anmeldung: 04.11.1998
(73) Patentinhaber: SICK AG, 79183 Waldkirch (DE)
(72) Erfinder: Bürger, Jürgen, 79331 Nimburg (DE); Alt, Gerhard, 79350 Sexau (DE); Geissler, Günther, 79194 Heuweiler (DE); Sekat, Winfried, 79183 Waldkirch (DE)
(74) Vertreter: Finsterwald, Martin, Dr.

(56) Entgegenhaltungen:
- EP-A- 0 372 204
- FR-A- 2 731 522
- US-A- 4 851 689
- US-A- 4 886 976
- US-A- 5 198 877

## Beschreibung

Die Erfindung betrifft eine opto-elektronische Sensoranordnung mit einem Lichtsender zur Aussendung von aufeinanderfolgenden Nutzlichtimpulsen in einen Überwachungsbereich und einer Lichtempfängereinheit zum Empfang von von einem im Überwachungsbereich befindlichen Objekt reflektierten Nutzlichtimpulsen, bei dem die Lichtempfängereinheit ein photoempfindliches Element umfaßt, dem eine Schaltung zur Fremdlichtunterdrückung zugeordnet ist.

Bei derartigen Sensoranordnungen können die Lichtempfängereinheiten auch mehrere photoempfindliche Elemente umfassen, so daß nach einer geeigneten Auswertung der von den photoempfindlichen Elementen gelieferten Signale auf die Position des reflektierenden Objektes im Überwachungsbereich geschlossen werden kann.

Diese Sensoranordnungen sind beispielsweise aus der US-A-5,198,877 und der US 4,851,689 als PSDs (positionssensitive Detektoren) oder als beispielsweise in Videokameras verwendete CCDs bekannt und besitzen den ihnen gemeinsamen Nachteil, daß lediglich eine unzureichende Fremdlicht-, insbesondere Gleichlichtfilterung möglich ist. PSDs erlauben aufgrund einer bereits früh eintretenden Sättigung lediglich eine beschränkte Fremdlichtfilterung, CCDs ermöglichen lediglich die Beseitigung von Fremdlicht, insbesondere Gleichlicht durch eine nach dem eigentlichen Lichtempfang stattfindenden Subtraktion eines Fremdlichtwerts, welcher über alle photoempfindlichen Elemente gemittelt ist. Zudem ist es bei PSDs von Nachteil, daß zu einem bestimmten Zeitpunkt immer nur ein einziges Objekt erkannt werden kann.

Weitere Beispiele für Sensoranordnungen der eingangs genannten Art finden sich in der US-A-4,886,976, der FR-A-2 731 522 und der EP-A-0 372 204.

Aufgrund der vorstehend beschriebenen Nachteile eignen sich aus dem Stand der Technik bekannte Sensoren nur sehr beschränkt für den Industrieeinsatz, bei dem beispielsweise eine wirksame und zuverlässige Unterdrückung von Fremdlicht, welches in Industrieanwendungen mit einer erheblichen Signaldynamik auftritt, zwingend erforderlich ist.

Eine Aufgabe der Erfindung besteht darin, eine opto-elektronische Sensoranordnung der eingangs genannten Art derart weiterzubilden, daß eine verbesserte Fremdlicht-, insbesondere Gleichlichtunterdrückung ermöglicht wird.

Erfindungsgemäß wird diese Aufgabe durch eine Sensoranordnung nach Anspruch 1 gelöst. Die Schaltung zur Fremdlichtunterdrückung weist eine mit dem photoempfindlichen Element verbundene geregelte Energiequelle, z.B. eine Stromquelle auf. Diese Energiequelle liefert dabei einen durch das photoempfindliche Element fließenden Strom, welcher in den Pausen zwischen den Nutzlichtimpulsaussendungen dem vorhandenen Fremdlicht entspricht. Der von der genannten Energiequelle gelieferte Strom wird dann erfindungsgemäß auch während der Nutzlichtsignalaussendung auf demjenigen Wert gehalten, der dem zuletzt ermittelten oder dem in den Zeitbereich einer Nutzlichtsignalaussendung extrapolierten Fremdlichtverlauf entspricht.

Der beim Empfang von Nutzlicht zusätzlich durch das photoempfindliche Element fließende Strom wird aus einer anderen Energiequelle, insbesondere einem Kondensator bezogen, wobei der meßbare Wert dieses zusätzlichen Stroms dann letztlich dem empfangenen Nutzlicht entspricht.

Um das genannte Prinzip der Nutzsignalermittlung zu realisieren, ist die Regelung der Energiequelle in den Pausen zwischen der Aussendung der Nutzlichtimpulse zuschaltbar und während der Aussendung der Nutzlichtimpulse abschaltbar.

Ebenso ist es jedoch auch möglich, die Regelung in Zeiten der Aussendung der Nutzlichtimpulse gegenüber der Regelung in den Pausen zwischen der Aussendung der Nutzlichtimpulse veränderbar auszuführen, wobei die Änderung des Regelverhaltens insbesondere durch Aktivierung und Deaktivierung zumindest eines Filters eines Regelkreises bewirkbar ist. Dabei ist in den Pausen zwischen der Aussendung der Nutzlichtimpulse ein Filter mit kürzerer Zeitkonstante aktivierbar als während der Aussendung der Nutzlichtimpulse.
Durch die letztgenannte Vorgehensweise kann während der Aussendung der Nutzlichtimpulse eine Extrapolation des von der Energiequelle gelieferten Stromes in Abhängigkeit von dessen Verlauf in den Pausen zwischen der Nutzlichtaussendung erreicht werden, so daß die Fremdlichtkompensation zusätzlich verbessert wird.

Vorteilhafterweise umfaßt die Lichtempfängereinheit zumindest zwei photoempfindliche Elemente, wobei jedem photoempfindlichen Element jeweils eine Schaltung zur Fremdlichtunterdrückung zugeordnet wird. Somit ist jedes photoempfindliche Element mit einer eigenen, separaten Fremdlichtunterdrückungs-Schaltung ausgerüstet.

Dies ermöglicht eine besonders zuverlässige und effektive Fremdlichtunterdrückung, die beispielsweise auch dann eine sichere Nutzlichtsignalerkennung ermöglicht, wenn der Dynamikbereich des Nutzlichtsignals deutlich kleiner als der Dynamikbereich des Fremdlichts ist. Insbesondere ist es erfindungsgemäß beispielsweise möglich, bei einem Fremdlicht-Dynamikbereich von 10⁷ Nutzlichtsignale mit einem vergleichsweise geringem Dynamikbereich von beispielsweise bis zu 10³ zuverlässig zu erkennen. Dies ist auch dann möglich, wenn das Fremdlicht Amplituden aufweist, die mehrere Zehner-Dekaden über den Amplituden des Nutzlichts liegen.

Weiterhin ist es hierbei vorteilhaft, daß aufgrund der in jeder Zelle einer Zeile oder eines Arrays bzw. bezüglich jeden photoempfindlichen Elements getrennt stattfindenden Fremdlichtunterdrückung unterschiedlich beleuchtete Hintergrundflächen keinerlei negative Auswirkungen auf die Nutzlichtsignalauswertung haben. Das empfangene Nutzlicht gibt immer korrekt Aufschluß über die Reflektivität von Objekten oder Hintergrundelementen im Überwachungsbereich, unabhängig davon, in welcher Weise diese Objekte bzw. Hintergrundelemente durch Fremdlicht beleuchtet werden. Wenn also beispielsweise ein Objekt im Überwachungsbereich vorhanden ist und das von der opto-elektronischen Sensoranordnung ausgesandte Licht von einer Hintergrundfläche mit gleichmäßiger, homogener Reflektivität reflektiert wird, liefert die Hintergrundfläche auch dann ein konstantes, ihre homogene Reflektivität repräsentierendes Empfangssignal, wenn bestimmte Bereiche der Hintergrundfläche stärker durch Fremdlicht bestrahlt werden als andere Bereiche. Inhomogene Beleuchtungen der Hintergrundfläche werden somit erfindungsgemäß neutralisiert.

Die Fremdlichtunterdrückung läßt sich zusätzlich dadurch verbessern, daß nur relativ kurze Nutzlichtimpulse, insbesondere solche mit hoher Energie, ausgesandt werden. Die Dauer der Nutzlichtimpulse kann dabei beispielsweise im ns-Bereich liegen.

Die Pulsdauer des Nutzlichtsignals kann vorzugsweise zwischen 1µs und 20µs betragen. Von Vorteil ist es, wenn der Kehrwert der Pulsdauer des Nutzlichts ungefähr um zwei Größenordnungen über der höchsten vorkommenden Störlichtfrequenz liegt, da dann eine besonders zuverlässige Stör- bzw. Fremdlichtunterdrückung möglich wird.

Aufgrund der Fremdlichtunterdrückung wird es möglich, anstelle eines aus dem Stand der Technik bekannten logarithmischen Übertragungsverhaltens des Sensors ein lineares Übertragungsverhalten vorzusehen, d.h., der von den photoempfindlichen Elementen gelieferte Nutzlicht-Empfangsstrom kann einen zum Reflexions- oder Remissionsgrad der im Überwachungsbereich befindlichen Objekte und Elemente proportionalen Verlauf aufweisen.

Besonders vorteilhaft ist der Einsatz einer erfindungsgemäßen Sensoranordnung dann, wenn eine Vielzahl von photoempfindlichen Elementen nebeneinander in Zeilenanordnung oder Matrixanordnung vorgesehen werden. Insbesondere bei einer Matrixanordnung wird es möglich, nicht nur das Vorhandensein eines Objektes im Überwachungsraum sondern auch dessen Position zu ermitteln.

Jede der Schaltungen zur Fremdlichtunterdrückung kann mit einem Speicherelement zur Speicherung des vom photoempfindlichen Element empfangenen Nutzlichtanteils versehen werden, wobei das Speicherelement insbesondere als Kondensator ausgeführt wird.

Während des Nutzlichtimpuls-Empfangs kann das Speicherelement über einen Schalter mit dem photoempfindlichen Element koppelbar sein, so daß die Amplitude des empfangenen Nutzlichts in das Speicherelement übertragen wird.

Von Vorteil ist es, wenn alle Speicherelemente gleichzeitig mit den ihnen jeweils zugeordneten photoempfindlichen Elementen koppelbar sind, so daß auch schnelle Bewegungen von Objekten im Überwachungsbereich korrekt erfaßbar sind. Die genannte gleichzeitige Kopplung der Speicherelemente mit den photoempfindlichen Elementen ermöglicht somit korrekte und von Fremdlicht bereinigte Momentaufnahmen des Überwachungsbereichs.

Um eine ständige Überwachung des Überwachungsbereichs zu ermöglichen und in kurzen Zeitabständen aufeinanderfolgende Momentaufnahmen des Überwachungsbereichs verfügbar zu machen, kann das Speicherelement jeder der vorgesehenen Schaltungen zur Fremdlichtunterdrückung mit einer während der Pause zwischen der Aussendung der Nutzlichtimpulse aktivierbaren Rücksetzschaltung gekoppelt sein. So können alle vorhandenen Speicherelemente nach einer erfolgten Momentaufnahme und nachdem die gespeicherten Werte einer Auswerteschaltung zur Verfügung gestellt wurden, wieder auf einen neutralen Wert zurückgesetzt und somit für die Speicherung eines neuen Nutzlichtsignalwerts bereit gemacht werden.

Die vorgesehenen Speicherelemente können über einen insbesondere adressierbaren Schalter mit einem oder mehreren Sample- und-Hold-Gliedern, einer Komparatorschaltung oder einem A/D-Wandler verbunden sein.

Bei Übertragung des in den Speicherelementen gespeicherten Werts in ein Sample-und-Hold-Glied wird auf vorteilhafte Weise erreicht, daß die mit der Sensoranordnung ermittelten Informationen über den Überwachungsbereich zeitunkritisch ausgelesen und ausgewertet werden können. Insbesondere ist eine Weiterverarbeitung eines in einem Sample-und-Hold-Glied gespeicherten Wertes möglich, während in den Speicherelementen jeweils bereits wieder neue Werte gespeichert werden.

Bei Vorsehung von geeigneten Komparatorschaltungen oder einem A/D-Wandler, denen die Werte der Speicherelemente zugeführt werden, ist es möglich, auch eine Aussage über die Amplitude der in den Speicherelementen gespeicherten Werte und somit über Grauwerte eines Bildes zu treffen, das mit einer erfindungsgemäßen Sensoranordnung beispielsweise mit einer Momentaufnahme der genannten Art erfaßt wurde. Die Auflösung der Grauwerte kann dabei an die jeweiligen Anforderungen angepaßt werden, beispielsweise ist es in bestimmten Fällen ohne weiteres möglich, die in den Speicherelementen gespeicherten, eine Vielzahl von verschiedenen Amplituden aufweisenden Werte im Rahmen einer Datenreduktion auf einige wenige, für den jeweiligen Anwendungsfall prägnante Graustufen zu reduzieren.

Bei Einsatz einer Komparatorschaltung ist es von Vorteil, wenn diese einen verstellbaren Schwellwert aufweist, da auf diese Weise erreicht werden kann, daß der Schwellwert, welcher letztlich dafür maßgeblich ist, ab welcher empfangenen Lichtmenge tatsächlich ein Lichtempfang signalisiert wird, an die jeweils gegebenen Verhältnisse angepaßt werden kann. Insbesondere ist es in diesem Fall möglich, im Rahmen eines vor der eigentlichen Messung stattfindenden Teachvorganges den Schwellwert des Komparators an die jeweils gegebenen Kontrastverhältnisse anzupassen. Durch die Vorsehung des verstellbaren Schwellwerts und die Einschaltung eines Teachvor-. ganges kann auf vorteilhafte Weise der Einsatz eines A/D-Wandlers eingespart werden, was überdies zu einer maximalen Datenreduktion auf lediglich zwei Werte (Lichtempfang ja/Lichtempfang nein) führt.

Ein besonders wirtschaftlicher Einsatz der Sensoranordnung wird möglich, wenn alle photoempfindlichen Elemente der Lichtempfängereinheit auf einem einzigen Chip angeordnet werden. Ebenso können alle Schaltungen zur Fremdlichtunterdrückung ebenfalls auf dem genannten Chip angeordnet werden, so daß die gesamte erfindungsgemäße Sensoranordnung auf einen einzigen Chip integrierbar ist.

Die photoempfindlichen Elemente der Lichtempfängereinheit können äquidistant voneinander beabstandet oder direkt aneinander angrenzend angeordnet werden. Es können somit geometrische Verhältnisse erreicht werden, die denen von CCD-Arrays entsprechen, wobei sowohl große als auch kleine Empfängergrößen, d.h. photoempfindliche Elemente mit großen und kleinen Empfangsflächen realisierbar sind. Insbesondere ist es möglich, die photoempfindlichen Elemente so dicht beieinander anzuordnen, daß sich eine photoempfindliche Fläche mit nahezu 100% Füllgrad ergibt.

Die photoempfindlichen Flächen der vorgesehen Elemente können unterschiedliche geometrische Formen aufweisen, wobei die Form an die jeweils gegebenen Anforderungen anpaßbar ist.

Schließlich ist es auch möglich, den photoempfindlichen Elementen jeweils Farbfilter, insbesondere in ihrer Durchlaßfrequenz verstellbare Farbfilter vorzuschalten. Auf diese Weise kann die erfindungsgemäße Sensoranordnung auch als mehrdimensionales Farberkennungssystem genutzt werden.

Um eine zuverlässige Farberkennung zu ermöglichen, können beispielsweise immer drei aneinander angrenzende photoempfindliche Elemente mit unterschiedlichen Farbfiltern versehen werden, so daß immer jeweils eine Einheit von drei photoempfindlichen Elementen zur Erkennung eines Farbpixels geeignet ist.
Alternativ ist es auch möglich, allen photoempfindlichen Elementen jeweils einen verstellbaren Farbfilter vorzuschalten, so daß in kurz aufeinanderfolgenden Zeitabständen beispielsweise drei Momentaufnahmen des Überwachungsbereichs mit jeweils unterschiedlich eingestellten Farbfiltern aufgenommen werden, wobei diese drei Momentaufnahmen dann zu einem Farbbild zusammensetzbar sind.

Bei einem vorteilhaften Verfahren zum Betrieb einer opto-elektronischen Sensoranordnung der beschriebenen Art wird mittels einer Auswerteschaltung beispielsweise die Position, die Bewegung, das Höhenprofil einschließlich eventueller schräger Flanken und/oder der Kontrast eines im Überwachungsbereich befindlichen Objekts ermittelt. Eine Auswerteschaltung, die dazu in der Lage ist, eine oder mehrere der vorstehend genannten Funktionen zu verwirklichen, ermöglicht vielfältige Einsatzmöglichkeiten der erfindungsgemäßen Sensoranordnung. Von Vorteil ist es, wenn die Auswerteschaltung mehrere Funktionen realisieren kann, zwischen denen der Benutzer der Sensoranordnung umschalten kann, ohne daß hierfür eine Neuprogrammierung der Sensoranordnung erforderlich wäre. Diese Umschaltfunktion kann insbesondere durch einen Wahl-Schalter realisiert werden.

Bei Ermittlung der Position, der Bewegung, des Höhenprofils oder des Kontrastes eines Objektes mittels der erfindungsgemäßen Sensoranordnung ist es von Vorteil, wenn das jeweilige Objekt aktiv, insbesondere mit definierter Lichtstärke beleuchtet wird, da auf diese Weise eine sichere Erkennung und fehlerfreie Auswertung sichergestellt werden kann.

In diesem Zusammenhang wird darauf hingewiesen, daß die Sensoranordnung prinzipiell auch ohne aktiven Lichtsender betrieben werden kann, wobei in diesem Fall Fremd- bzw. Umgebungslicht vom im Überwachungsbereich befindlichen Objekt zur Lichtempfängereinheit reflektiert wird oder das Objekt selbst als Lichtquelle ausgebildet ist. Fremd- bzw. Umgebungslicht sollten in diesem Fall jedoch die erforderliche Zeitsynchronisation besitzen. Die Lichtempfängereinheit umfaßt auch bei dieser Anwendungsmöglichkeit zumindest zwei photoempfindliche Elemente, wobei jedem photoempfindlichen Element jeweils eine Schaltung zur Fremdlichtunterdrückung zugeordnet ist.

Es sind zwei mögliche Einsatzfälle einer mit aktivem Lichtsender betriebenen erfindungsgemäßen Sensoranordnung zu unterscheiden.
Bei einem ersten Einsatzfall wird am der Sensoranordnung gegenüberliegenden Ende des Überwachungsbereichs ein den Überwachungsbereich begrenzender Reflektor vorgesehen, welcher dazu dient, vom Lichtsender der Sensoranordnung ausgesandtes Licht zurück zum Empfänger zu reflektieren. Dies ist beispielsweise bei großen Entfernungen sinnvoll, bei denen sichergestellt werden muß, daß ausreichend Licht zurück zum Empfänger reflektiert wird.
Bei einem zweiten Einsatzfall wird am der Sensoranordnung gegenüberliegenden Ende des Überwachungsbereichs kein den Überwachungsbereich begrenzender Reflektor vorgesehen, was beispielsweise bei kurzen Entfernungen oder dann, wenn ein zu erkennendes Objekt ausreichende Reflexionseigenschaften aufweist, sinnvoll ist.

Bei Einsatz des vorstehend erwähnten Reflektors ist es sinnvoll, vor Inbetriebnahme der Sensoranordnung den Reflektor bei objektfreiem Überwachungsbereich derart zu verschwenken und/oder verschieben, bis alle photoempfindlichen Elemente der Lichtempfängereinheit einen Lichtempfang signalisieren. Durch diese Ausrichtung des Reflektors wird erreicht, daß immer dann, wenn bei Betrieb der Sensoranordnung alle photoempfindlichen Objekte einen Lichtempfang signalisieren, davon ausgegangen werden kann, daß sich kein Objekt im Überwachungsbereich befindet. Wenn ein Objekt in den Überwachungsbereich eingebracht wird, verhindert dieses, daß ein Teil der vom Lichtsender ausgesandten Strahlung zum Reflektor gelangt und somit auch nicht zurück zur Lichtempfängereinheit reflektiert werden kann. Ebenso können in den Überwachungsbereich eingebrachte durchscheinende oder transparente Objekte eine Strahlungsdämpfung bewirken. Die entsprechenden photoempfindlichen Elemente der Lichtempfängereinheit werden dann keinen oder einen geringeren Lichtempfang signalisieren, wodurch auf das Vorhandensein eines Objektes im Überwachungsbereich und insbesondere auch auf dessen Position geschlossen werden kann.

Das erfindungsgemäße Prinzip kann beispielsweise in einem Sensor nach dem Lichtschnittverfahren eingesetzt werden, um das Vorhandensein, die Position, die Höhe oder das Gesamtprofil eines Objektes zu bestimmen. Dabei wird der Lichtsender der Sensoranordnung derart betrieben, daß er beispielsweise ein im wesentlichen in einer Ebene liegendes V-förmiges Lichtbündel aussendet, welches eine reflektierende Linie auf der Oberfläche eines im Überwachungsbereich vorhandenen Objektes, den sogenannten Lichtschnitt, erzeugt.

Weiterhin ist es möglich, mit dem erfindungsgemäßen Prinzip eine Durchhangregelung eines flexiblen Objektes, beispielsweise eines Fadens oder eines Bandes zu regeln, indem der durchhängende Bereich des flexiblen Objektes in den Überwachungsbereich der Sensoranordnung eingebracht wird.

Weiterhin kann das erfindungsgemäße Prinzip dazu verwendet werden, Kanten von Objekten, Linien, den Abstand bzw. Lücken zwischen zwei Objekten oder die Breite, die Länge oder die Größe eines Objektes zu ermitteln. Die Objekte können sich dabei insbesondere auf einem sie transportierenden Fördermittel befinden. Der Einsatz des erfindungsgemäßen Prinzips führt dabei auf vorteilhafte Weise zu einer schnellen Auswertemöglichkeit, zur Möglichkeit der wählbaren Einstellung von Erkennungs- und Toleranzbereichen, zur Möglichkeit der Detektion geringer Kontrastunterschiede, insbesondere mittels Teach-in-Verfahren, sowie zur Möglichkeit der Erkennung kleiner Objekte, Linien oder Lücken.

Zudem ist es möglich, das erfindungsgemäße Prinzip einzusetzen, um einen stationären Zustand, insbesondere die Position von einem oder mehreren Objekten zu überwachen, wobei ein Warnsignal immer dann abgeben wird, wenn die Position eines Objektes außerhalb eines vorbestimmten Toleranzbereiches liegt.

Es ist auch möglich, das erfindungsgemäße Prinzip zur Erkennung von einem oder mehreren Objekten oder Objektmerkmalen anhand ihrer Reflektivität, Ihrer Form, Ihrer Abmessungen und/oder Ihrer Kontur zu verwenden.

Auch transparentes Material kann gemäß dem erfindungsgemäßen Prinzip insbesondere mit Licht überwacht werden. Wenn beispielsweise im Rahmen einer Durchhangregelung transparentes Material überwacht wird, bedingt die untere Kante des durchhängenden Materials in Lichtausbreitungsrichtung eine gewisse Wegstrecke, die sowohl vom ausgesandten als auch vom reflektierten Licht durchlaufen werden muß. Somit ist in diesem Bereich der unteren Kante eine größere Absorption bzw. Reflexion gegeben als beim restlichen durchhängenden Material bzw. bei dem unterhalb des durchhängenden Materials befindlichen Bereich. Folglich wird im Bereich der genannten Kante weniger Licht zum Lichtempfänger reflektiert als in den übrigen Bereichen, wodurch die untere Kante des durchhängenden Materials mittels des erfindungsgemäßen Prinzips detektiert werden kann.

Analog kann vorgegangen werden, wenn beispielsweise transparente Flaschen erfaßt werden sollen. Auch hier wird das Licht beim im wesentlichen radialen Durchtreten durch die Flaschenwände an der Außenseite der Flaschen sowohl beim Aussenden als auch beim Reflektieren des Lichts eine relativ lange Wegstrecke im transparenten Material zurücklegen, so daß auch hier eine größere Absorption bzw. Reflexion des Lichtes stattfindet als in den restlichen Flaschenbereichen bzw. denjenigen Bereichen, in denen keinerlei Flaschen vorhanden sind. Erfindungsgemäß sind also die Außenseiten bzw. die "Kanten" der Flaschen detektierbar.

Die Anwendung des erfindungsgemäßen Prinzips ist insbesondere dann vorteilhaft, wenn der Lichtsender mit unterschiedlichen Wellenlängen bzw. unterschiedlichen Farben arbeiten kann, so daß beispielsweise im Rahmen eines Teach-In-Verfahrens die optimale Wellenlänge für eine Kontrasterkennung, eine Kantenerkennung, eine Objekterkennung oder sonstige Detektionsvorgänge einlernbar ist.

Schließlich kann das erfindungsgemäße Prinzip auch zur Erkennung eines ein- oder zweidimensionalen Codes, insbesondere eines Barcodes oder einer Schrift verwendet werden.

Ebenso sind beliebig viele weitere Verwendungsmöglichkeiten des erfindungsgemäßen Prinzips realisierbar.

Weitere bevorzugte Ausführungsformen der Erfindung sind in den Unteransprüchen angegeben.

Die Erfindung wird nachfolgend anhand von Ausführungsbeispielen unter Bezugnahme auf die Figuren beschrieben; diese zeigen:
- Fig. 1: ein Prinzipschaltbild einer Zelle einer erfindungsgemäßen Sensoranordnung, von der in einer erfindungsgemäßen Sensoranordnung zumindest zwei Stück enthalten sind,
- Fig. 2: ein Prinzipschaubild einer zur Ermittlung eines Lichtschnitts eingesetzten erfindungsgemäßen Sensoranordnung,
- Fig. 3: ein Prinzipschaubild einer zur Regelung eines Durchhangs eingesetzten erfindungsgemäßen Sensoranordnung,
- Fig. 4: ein Prinzipschaubild einer zur Objekterkennung eingesetzten erfindungsgemäßen Sensoranordnung,
- Fig. 5a: die Umrisse eines mit einer Vorrichtung gemäß Fig. 4 zu erkennenden, unterschiedliche Helligkeitsbereiche aufweisenden Objektes in der Draufsicht, und
- Fig. 5b-d: von einem erfindungsgemäßen Sensor hinsichtlich des Objektes gemäß Fig. 5a gelieferte Bilder bei unterschiedlicher Einstellung zu erkennender Kontraststufen.

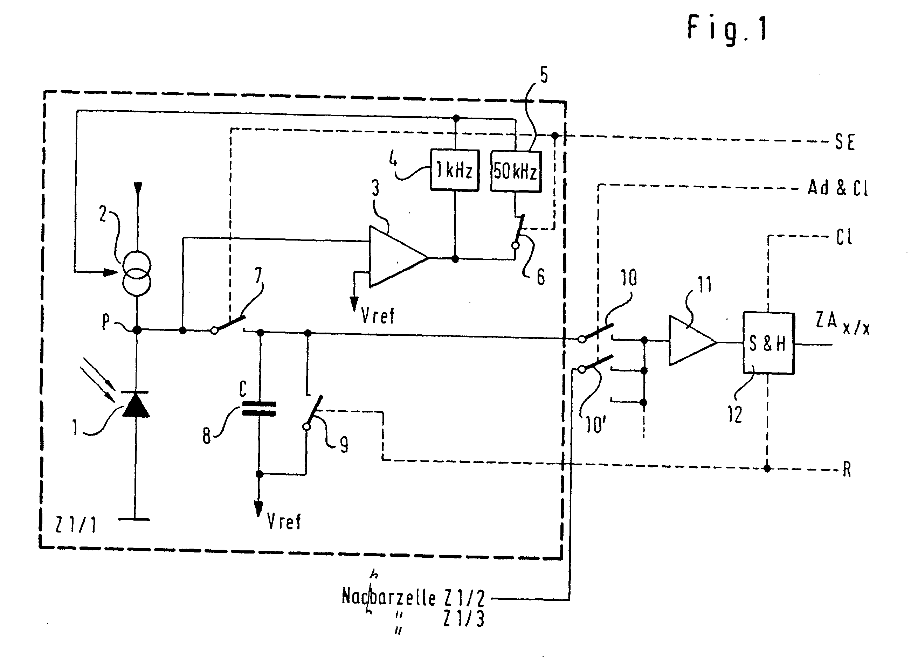

Erfindungsgemäß können eine Vielzahl von in Fig. 1 dargestellten Zellen in einer Zeile oder in einem Array angeordnet werden.

Die in Fig. 1 dargestellte Zelle weist ein als Photodiode 1 ausgebildetes photoempfindliches Element auf, das einerseits mit dem Erdpotential und andererseits mit einer Stromquelle 2 verbunden ist.

Der der Photodiode 1 und der Stromquelle 2 gemeinsame Potentialpunkt P ist mit dem Eingang eines Reglers 3 gekoppelt, dessen Ausgang über zwei parallel geschaltete, insbesondere jeweils als Tiefpaß ausgebildete Filter 4, 5 auf den Steuereingang der Stromquelle 2 geschaltet ist, so daß der Regler 3 letztlich bewirkt, daß der Potentialpunkt P zwischen Stromquelle 2 und Photodiode 1 auf dem Potential V_{ref} gehalten wird, welches an den zweiten Eingang des Reglers 2 angelegt ist.

Das erste Filter 4 weist eine Zeitkonstante von 1kHz auf und ist direkt zwischen den Ausgang des Reglers 3 und den Regeleingang der Stromquelle 2 geschaltet. Das zweite Filter 5 weist eine Zeitkonstante von 50kHz auf und ist ebenfalls zwischen den Ausgang des Reglers 3 und den Regeleingang der Stromquelle 2 geschaltet, wobei allerdings zwischen dem Ausgang des Reglers 3 und dem Eingang des Filters 5 ein steuerbarer Schalter 6 vorgesehen ist.

Das gemeinsame Potential P der Photodiode 1 und der Stromquelle 2 ist über einen ebenfalls steuerbaren Schalter 7 mit einem Pol eines Kondensators 8 verbunden, dessen anderer Pol auf dem Potential V_{ref} liegt.

Parallel zum Kondensator 8 ist ein steuerbarer Rücksetzschalter 9 vorgesehen.

Der dem Kondensator 8 zugewandte Pol des Schalters 7 ist über einen weiteren Schalter 10 mit dem Eingang eines Verstärkers 11 gekoppelt, dessen Ausgang dem Eingang eines Sample- und Hold-Glieds 12 zugeführt ist.

Die Schalter 6 und 7 sind von einem gemeinsamen Steuereingang SE beaufschlagt, d.h., daß beide Schalter durch das Steuersignal SE gleichzeitig betätigbar sind, wobei der Schalter 7 immer dann geöffnet ist, wenn der Schalter 6 geschlossen ist und umgekehrt.

Mit dem Eingang des Verstärkers 11 sind mehrere Schalter 10, 10', etc. gekoppelt, von denen jeder jeweils einer in Fig. 1 dargestellten Zelle zugeordnet ist. Wenn somit die Schalter 10, 10', etc. sequentiell nacheinander betätigt werden, können sequentiell nacheinander die in den Kondensatoren 8, 8', etc. gespeicherten Werte in dem dargestellten Sample-und-Hold-Glied 12 gespeichert werden.

Für die sequentiell nacheinander erfolgende Betätigung der Schalter 10, 10', etc. ist eine Adress- und Taktleitung Ad & Cl vorgesehen, über die jeweils einer der Schalter 10, 10', etc. adressier- und betätigbar ist.

Der Taktbestandteil des Signals Ad & Cl ist als Signal Cl an den Takteingang des Sample-und-Hold-Glieds 12 angelegt, um dieses entsprechend zu takten und für ein zeitrichtiges Einlesen der in den Kondensatoren 8, 8', etc. gespeicherten Werte zu sorgen.

Schließlich ist eine Rücksetzleitung R vorgesehen, mittels welcher zum einen der Schalter 9 betätig- bzw. schließbar und zum anderen das Sample-und-Hold-Glied 12 rücksetzbar ist.

Beim Betrieb der beschriebenen Schaltung befinden sich die Schalter 6, 7, 9, 10 und 10' während der Pausen zwischen der Aussendung der Nutzlichtimpulse in der dargestellten Stellung.

Die Funktionsweise der vorstehend erläuterten Schaltung ist wie folgt:

In den Pausen zwischen der Aussendung der Nutzlichtimpulse ist der aus den Elementen 2 - 6 bestehende Regelkreis aktiv, wobei hier das Filter 5 mit der Zeitkonstante 50kHz maßgeblich ist. Dies bedeutet, daß der Regelkreis schnellen Änderungen am Potentialpunkt P folgt, die über die Photodiode 1 durch Umgebungslicht verursacht werden. In den genannten Pausen zwischen der Aussendung der Nutzlichtimpulse sorgt der erläuterte Regelkreis folglich mit einer Zeitkonstanten von 50kHz dafür, daß der Potentialpunkt P unabhängig von Amplitude und Frequenz des Umgebungslichts auf dem Potential V_{ref} gehalten wird. Der Kondensator 8 wird bei den in der Zeichnung dargestellten Schalterstellungen auf das Potential V_{ref} aufgeladen, d.h., im Kondensator 8 ist Ladung gespeichert.

Wenn ein Nutzsignalempfang stattfinden soll, beaufschlagt das Signal SE die beiden Schalter 6 und 7 derart, daß der Schalter 6 geöffnet und der Schalter 7 geschlossen wird.

Durch das Öffnen des Schalters 6 wird das Filter 5 außer Kraft gesetzt, was bedeutet, daß lediglich noch das Filter 4 mit einer Zeitkonstanten von 1kHz aktiv ist. Der beschriebene Regelkreis folgt somit nur noch langsamen Signaländerungen und bewirkt am Potentialpunkt P, daß die vor dem Öffnen des Schalters 6 aktive Regelung nur noch für Störsignale mit entsprechend geringer Frequenz fortgesetzt wird.

In einer alternativen Ausführungsform der Erfindung kann auch ohne Filter 4 gearbeitet werden, was bedeutet, daß die Regelfunktion des beschriebenen Regelkreises während des Nutzsignalempfangs vollkommen aussetzt. In diesem Fall findet keine Extrapolation des Umgebungslichts in den Zeitbereich des Nutzsignalempfangs statt, und es wird lediglich derjenige Wert des Umgebungslichts kompensiert, welcher vor dem Nutzsignalempfang aktuell war.

Das unmittelbar vor dem Nutzsignalempfang stattfindende Schließen des Schalters 7 bewirkt, daß derjenige, durch die Photodiode 1 fließende zusätzliche Strom, der durch das Nutzlicht verursacht wird, aus dem Kondensator 8 bzw. aus der in diesem Kondensator 8 gespeicherten Ladung bezogen wird.

Während des Nutzsignalempfangs fließt somit durch die Photodiode 1 zum einen Strom, welcher von der Stromquelle 2 geliefert wird, und zum anderen Strom, welcher vom Kondensator 8 geliefert wird. Dabei entspricht der von der Stromquelle 2 gelieferte Strom dem Umgebungslicht und der vom Kondensator 8 gelieferte Strom dem Nutzlicht.

Nach dem Nutzsignalempfang wird über das Signal SE der Schalter 7 wieder geöffnet und der Schalter 6 geschlossen.

Durch das Öffnen des Schalters 7 wird sichergestellt, daß vom Kondensator 8 keine weitere Ladung abgezogen wird, so daß diejenige Ladung, die während des Nutzsignalempfangs vom Kondensator 8 abgezogen wurde, letztlich dem Nutzlichtanteil entspricht. Die Ladungsdifferenz des Kondensators 8 zwischen dem Zeitpunkt des Schließens des Schalters 7 und dem Zeitpunkt des Öffnen des Schalters 7 ist somit ein Maß für das empfangene Nutzlicht.

Durch Adressierung und Beaufschlagung des Schalters 10 über das Signal Ad & Cl wird die genannte Ladungsdifferenz des Kondensators 8 über den Verstärker 11 dem Sample-und-Hold-Glied 12 zugeführt, wo eine Speicherung dieses Differenzsignals erfolgt. Der im Sample-und-Hold-Glied 12 gespeicherte Wert kann dann auf beliebige Weise weiterverarbeitet werden.

Nach Auslesen des gespeicherten Werts aus dem Sample-und-Hold-Glied 12 wird dieses mittels des Signals R zurückgesetzt, wobei gleichzeitig ein Schließen des Schalters 9 erfolgt, wodurch der Kondensator 8 wieder auf das Potential V_{ref} gebracht wird, so daß - nach anschließendem Öffnen des Schalters 9 - der Kondensator 8 für einen neuerlichen Nutzsignalempfang bereit ist. Das Rücksetzen des Sample-und-Hold-Glieds 12 und das Schließen des Schalters 9 kann alternativ auch zu unterschiedlichen Zeitpunkten erfolgen.

Erfindungsgemäß kommen mehrere der in der Zeichnung dargestellten Zellen zum Einsatz, wobei es bevorzugt ist, wenn diese Zellen gleichzeitig mit dem Signal SE beaufschlagt werden, so daß der Nutzlichtempfang in allen Zellen gleichzeitig stattfindet. Das Auslesen der in den jeweiligen Kondensatoren 8, 8' etc. gespeicherten Differenzladungen kann dann zeitlich nacheinander durch entsprechende Adressierung und Betätigung der Schalter 10, 10', etc. erfolgen.

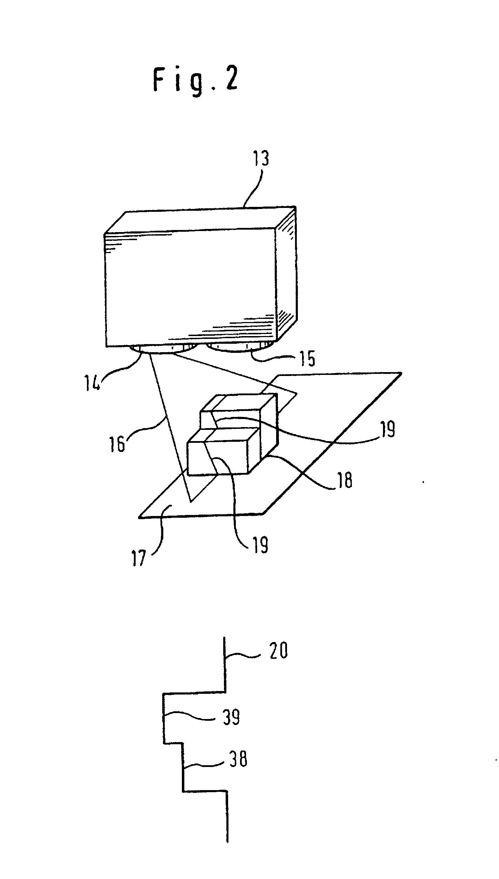

Fig. 2 zeigt eine erfindungsgemäße opto-elektronische Sensoranordnung 13, die in einem quaderförmigen Gehäuse untergebracht ist und auf einer ihrer langen Schmalseiten eine Sendeoptik 14 sowie eine neben dieser angeordnete Empfangsoptik 15 aufweist.

Im Gehäuse hinter der Sendeoptik 14 ist ein Lichtsender vorgesehen. Ebenso befindet sich hinter der Empfangsoptik 15 eine Lichtempfängereinheit mit einer Vielzahl von in einer Matrix angeordneten photoempfindlichen Elementen.

Lichtsender und Sendeoptik 14 sind derart ausgebildet, daß sie in einer Ebene 16 ein V-förmiges Lichtstrahlbündel aussenden, welches sich durch den Überwachungsbereich in Richtung einer Ebene 17 erstreckt, die den Überwachungsbereich auf der der Sensoranordnung 13 abgewandten Seite begrenzt.

Die Ebene 17 muß nicht zwangsläufig ein stationäres, am Ende des Überwachungsbereichs angeordnetes Element sein, sondern kann beispielsweise auch als Fördermittel ausgebildet werden, auf dem Objekte durch den Überwachungsbereich transportiert werden.

Auf der beispielsweise als Fördermittel ausgebildeten Ebene 17 befindet sich ein Objekt 18, welches aus zwei nebeneinander angeordneten, unterschiedlich großen Quadern besteht.

Der vom Lichtsender ausgesandte Lichtstrahl ist im gezeigten Ausführungsbeispiel derart ausgerichtet, daß er schräg auf das Objekt 18 auftrifft. Wesentlich ist, daß die Ebene 16 des Sendelichtstrahls in einem Winkel größer 0° zur optischen Achse der Empfangsoptik 15 verläuft, so daß es ebenso möglich wäre, den Sendelichtstrahl senkrecht auf das Objekt 18 auftreffen zu lassen und die optische Achse des Empfängers entsprechend schräg auszurichten.

Der auf die genannte Weise das Objekt 18 bestrahlende Lichtstrahl erzeugt auf dem Objekt 18 eine Lichtlinie 19, den sogenannten Lichtschnitt.

Von der Empfangsoptik 15 aus betrachtet weist diese Lichtlinie 19 den im unteren Bereich der Fig. 2 dargestellten Verlauf 20 auf. Der Darstellung des Verlaufs 20 gemäß Fig. 2 kann entnommen werden, daß dieser Verlauf 20 letztlich dem Höhenprofil des Objektes 18 entspricht, wobei der Bereich 38 des Verlaufs 20 den kleineren Quader des Objektes 18 und der Bereich 39 des Verlaufs 20 den größeren Quader des Objekts 18 kennzeichnet.

Mit der erfindungsgemäßen Sensoranordnung kann folglich auf einfache Weise mittels des Lichtschnittverfahrens das Höhenprofil eines Objektes bestimmt werden, wobei hier aufgrund des erfindungsgemäßen Prinzips eine hohe Störlichtsicherheit gewährleistet ist.

Das in Zusammenhang mit Figur 2 erwähnte Objekt 18 kann auch beliebig anders gestaltet sein. Beispielsweise kann es sich um ein einziges Objekt handeln, welches einen bestimmten Bearbeitungszustand aufweist, welcher erfindungsgemäß erkannt werden soll. So kann gemäß dem erfindungsgemäßen Prinzip z.B. erkannt werden, ob ein Objekt mit einer Fräsnut versehen ist bzw. ob die Fräsnut die gewünschten Abmessungen aufweist.

Ein typischer Anwendungsfall für die Erkennung mehrerer Objekte besteht in der Schuppenzählung eines Stroms von schindelartig aufeinanderliegenden Zeitungen oder Zeitschriften. Bei diesem Anwendungsfall wird erfindungsgemäß nur der Unterschied von Stufe zu Stufe ermittelt, wobei Schwankungen in der Höhe der abgetasteten Zeitungen bzw. Zeitschriften, die durch ein Vibrieren des die genannten Objekte transportierenden Förderbands entstehen, durch die genannte Relativmessung kompensiert werden. Unter Relativmessung wird in diesem Fall verstanden, daß lediglich die Stufen des Schuppenstroms, d.h. die Höhenunterschiede zwischen zwei aufeinanderfolgenden, schindelartig aufeinanderliegenden Zeitungen bzw. Zeitschriften ermittelt werden.

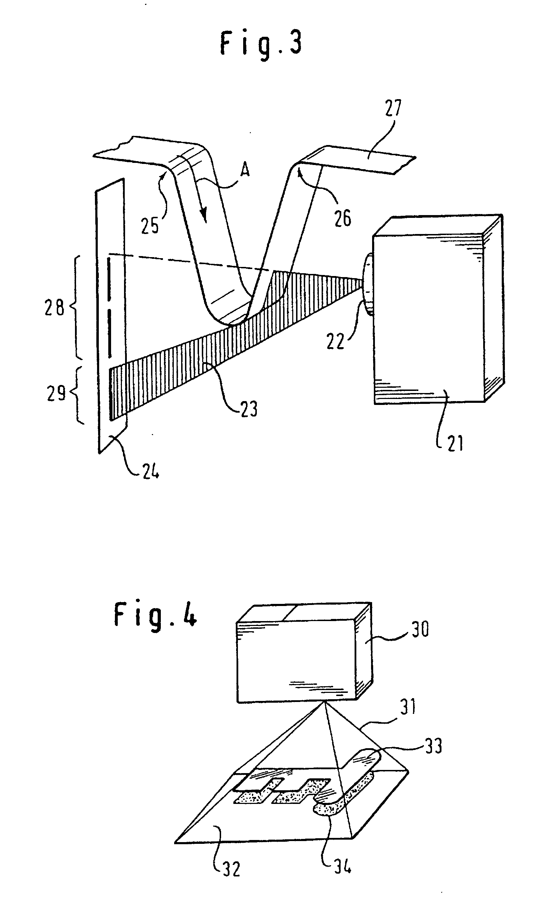

Fig. 3 zeigt eine erfindungsgemäße Sensoranordnung 21, welche wie die Sensoranordnung 13 gemäß Fig. 2 in einem quaderförmigen Gehäuse untergebracht ist.

Die Sensoranordnung 21 weist eine Autokollimationsoptik 22 auf, welche sowohl für die Sende- als auch für die Empfangsstrahlung maßgeblich ist.

Die Sensoranordnung 21 sendet einen V-förmigen Lichtstrahl 23 in Richtung eines Reflektors 24, welcher das ausgesandte Licht zurück zur Sensoranordnung 21 reflektiert.

Der Überwachungsbereich ist auf einer Seite durch den Reflektor 24 und auf der anderen Seite durch die Sensoranordnung 21 begrenzt.

In den Überwachungsbereich ragt ein flexibles, insbesondere in Richtung des Pfeiles A transportiertes Band 27, welches beispielsweise bei den Positionen 25 und 26 durch nicht dargestellt Transportrollen unterstützt sein kann.

Dabei hängt das Band 27 zwischen den Positionen 25 und 26 derart durch, daß es in den Bereich des Lichtstrahls 23 hineinragt und auf diese Weise verhindert, daß das gesamte von der Sensoranordnung 21 ausgesandte Licht auf den Bereich 28 des Reflektors trifft. Aufgrund des durchhängenden Bandes 27 trifft nur auf den Bereich 29 des Reflektors von der Sensoranordnung 21 ausgesandtes Licht auf, so daß auch nur von diesem Bereich 29 Licht zurück zur Sensoranordnung 21 reflektiert wird.

Je nach Größe des Durchhangs des Bandes 27 im Überwachungsbereich ändert sich das Verhältnis der Größen der Reflektorbereiche 28 und 29. Von der Sensoranordnung 21 kann die Größe des Bereichs 29 ermittelt werden, welche letztlich ein Maß für den aktuellen Durchhang des Bandes 27 darstellt.

So kann mit der erfindungsgemäßen Sensoranordnung auf einfache Weise eine Durchhangregelung realisiert werden, die unempfindlich gegenüber Störlicht ist. Die Unempfindlichkeit wird dabei - wie auch bei der Vorrichtung gemäß Fig. 2 - dadurch erreicht, daß die jeweils zum Einsatz kommende Lichtempfängereinheit eine Matrix oder eine Zeile mit einer Vielzahl von photoempfindlichen Elementen umfaßt, wobei jedem photoempfindlichen Element jeweils eine separate Schaltung zur Fremdlichtunterdrückung zugeordnet ist.

Die vorstehend in Verbindung mit Figur 3 beschriebene V-förmige Beleuchtung des Bandes 27 bzw. des Reflektors 24 kann alternativ auf vorteilhafte Weise auch durch eine telezentrische Beleuchtung ersetzt werden, welche im wesentlichen nur parallel gerichtete Lichtstrahlen umfaßt. Die Transformation der V-förmigen Beleuchtung in eine telezentrische Beleuchtung kann beispielsweise durch einen Hohlspiegel oder eine Linse erreicht werden.

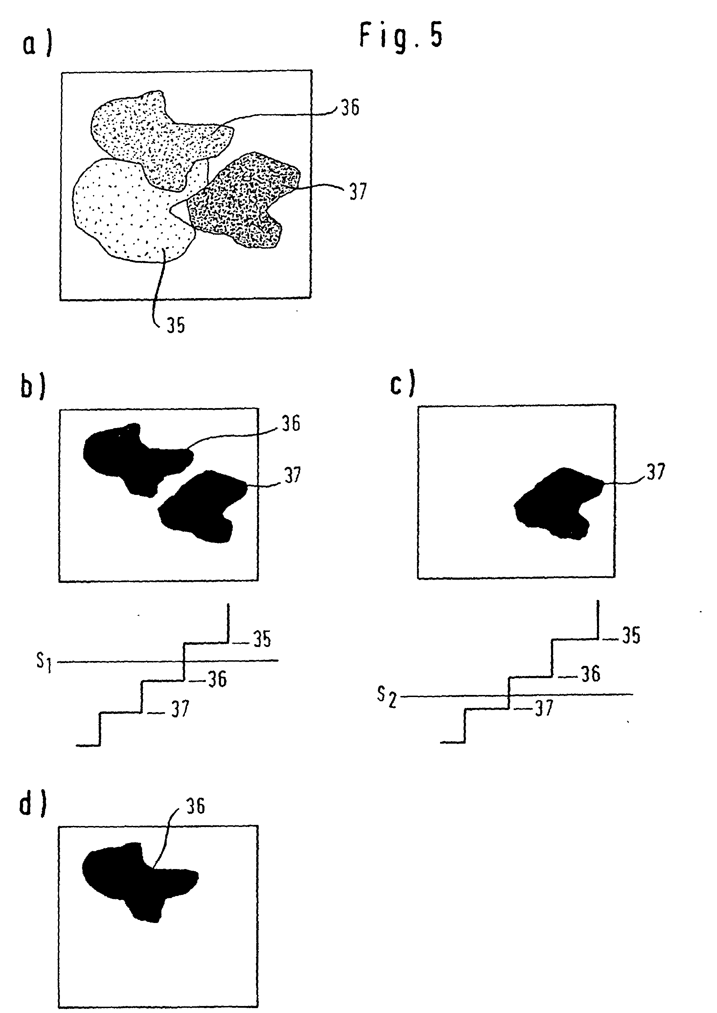

Fig. 4 zeigt eine erfindungsgemäße opto-elektronische Sensoranordnung 30, welche ebenso wie die Sensoranordnung gemäß den Figuren 2 und 3 in einem quaderförmigen Gehäuse untergebracht ist.

Die Sensoranordnung 30 sendet ein Lichtbündel 31 in Richtung eines Reflektors 32, welcher das ausgesandte Licht zurück zur Sensoranordnung 30 reflektiert.

Das Lichtbündel 31 ist dabei dergestalt ausgebildet, daß die gesamte Fläche des Reflektors 32 beleuchtet wird, so daß jeder reflektierende Punkt auf dem Reflektor 32 zu einer Erzeugung eines entsprechenden Signals in der Sensoranordnung 30 führen kann.

Zwischen Reflektor 32 und Sensoranordnung 30 befindet sich ein Objekt 33, dessen Schatten 34 auf den Reflektor 32 abgebildet wird. Im Bereich des Schattens 34 reflektiert der Reflektor 32 folglich kein Licht zurück zur Sensoranordnung 30, so daß in der Sensoranordnung 30 zwischen beschatteten und unbeschatteten Bereichen des Reflektors 32 unterschieden werden kann. Mit der erfindungsgemäßen Sensoranordnung 30 ist somit der Umriß des Schattens 34 und damit der Umriß des Objektes 32 ermittelbar, so daß die in Fig. 4 dargestellte Anordnung zur Erkennung beliebiger Objekte geeignet ist.

Falls die Sensoranordnung gemäß Fig. 4 mit erfindungsgemäßen photoempfindlichen Zellen ausgerüstet ist, die zur Unterscheidung unterschiedlicher Graustufen geeignet sind, kann beispielsweise das Bild eines Objektes gemäß Fig. 5a auf verschiedene Arten ausgewertet werden:

Das Objekt gemäß Fig. 5a weist drei unterschiedlich helle Bereiche auf, wobei der Bereich 35 am hellsten und der Bereich 37 am dunkelsten ist. Die Helligkeit des Bereichs 36 liegt zwischen den Helligkeiten der beiden Bereiche 35 und 37.

Eine erfindungsgemäße Sensoranordnung kann so programmiert bzw. eingestellt werden, daß sie nur solche Objekte bzw. Objektbereiche erkennt, welche eine Helligkeit aufweisen, die über oder unter einem Schwellwert oder zwischen zwei Schwellwerten liegen. Dies wird anhand der Figuren 5b-d veranschaulicht, die alle von einer erfindungsgemäßen Sensoranordnung gelieferte Bilder des Objektes gemäß Fig. 5a zeigen, wobei jeweils unterschiedliche Betriebsmodi der Sensoranordnung eingestellt sind.

Ein Bild gemäß Fig. 5b wird beispielsweise dann geliefert, wenn die Sensoranordnung derart eingestellt ist, daß lediglich solche Helligkeitsstufen des Objekts zu einer Bilderkennung führen, die unterhalb eines Schwellwerts S₁ liegen. Im dargestellten Ausführungsbeispiel liegen die Helligkeitsstufen der Objektbereiche 36 und 37 unterhalb des Schwellwerts S₁, während die Helligkeit des Objektbereichs 35 oberhalb dieses Schwellwertes liegt. Das Verhältnis der Helligkeitsstufen der Bereiche 35, 36 und 37 zum Schwellwert S₁ ist durch das Treppensignal sowie den eingezeichneten Schwellwert S₁ gemäß Fig. 5b veranschaulicht. Die erste Stufe des Treppensignals entspricht dem dunklen Objektbereich 37, die zweite Stufe entspricht dem mittleren Objektbereich 36 und die dritte Stufe entspricht dem hellen Objektbereich 35.

Fig. 5b zeigt, daß bei der genannten Schwellwerteinstellung lediglich die Objektbereiche 36 und 37 erkannt werden, während vom Hintergrund und vom Objektbereich 35 reflektiertes Licht nicht zur Abgabe eines entsprechenden Lichtsignals führt.

Somit beinhaltet das Bild gemäß Fig. 5b lediglich die Konturen der Objektbereiche 36 und 37.

Fig. 5c veranschaulicht eine Betriebsart des erfindungsgemäßen Sensors, bei dem ein niedrigerer Schwellwert S₂ eingestellt ist, so daß letztlich nur der dunkelste Objektbereich 37 erkannt wird.

Alternativ ist auch eine Betriebsart des erfindungsgemäßen Sensors möglich, bei der nur solche Objektbereiche erkannt werden, deren Helligkeit zwischen den beiden Schwellwerten S₁ und S₂ liegt. Das bei einer solchen Betriebsart gelieferte Bild des Objektes gemäß Fig. 5a ist in Fig. Fig. 5d veranschaulicht. Lediglich der Objektbereich 36 weist eine Helligkeit auf, die zwischen den beiden Schwellwerten S₁ und S₂ liegt, so daß auch nur dieser Objektbereich 36 abgebildet wird.

## Patentansprüche

1. Opto-elektronische Sensoranordnung mit einem Lichtsender zur Aussendung von aufeinanderfolgenden Nutzlichtimpulsen in einen Überwachungsbereich und einer Lichtempfängereinheit zum Empfang von von einem im Überwachungsbereich befindlichen Objekt reflektierten Nutzlichtimpulsen, bei dem die Lichtempfängereinheit ein photoempfindliches Element (1) umfaßt, dem eine Schaltung zur Fremdlichtunterdrückung zugeordnet ist, die eine mit dem photoempfindlichen Element (1) verbundene geregelte Energiequelle aufweist, die den dem Fremdlichtanteil entsprechenden Strom liefert, wobei die Regelung der Energiequelle (2) in den Pausen zwischen der Aussendung der Nutzlichtimpulse zugeschaltet wird und während der Aussendung der Nutzlichtimpulse abgeschaltet wird oder die Regelung in Zeiten der Aussendung der Nutzlichtimpulse gegenüber der Regelung in den Pausen zwischen der Aussendung der Nutzlichtimpulse verändert wird, **dadurch gekennzeichnet, daß** die Schaltung zur Fremdlichtunterdrückung ein Speicherelement (8) aufweist, das den dem Nutzlichtanteil entsprechenden Strom durch das photoempfindliche Element liefert und eine dem Nutzlichtanteil entsprechende Ladung speichert wobei dieses Speicherelement insbesondere als Kondensator (8) ausgebildet ist.

2. Opto-elektronische Sensoranordnung nach Anspruch 1,
**dadurch gekennzeichnet,**
**daß** die Lichtempfängereinheit zumindest zwei photoempfindliche Elemente (1) umfaßt, wobei jedem photoempfindlichen Element (1) jeweils eine Schaltung zur Fremdlicht-Unterdrückung nach Anspruch 1 zugeordnet ist.

3. Opto-elektronische Sensoranordnung nach Anspruch 2,
**dadurch gekennzeichnet,**
**daß** eine Vielzahl von photoempfindlichen Elementen (1) in einer Zeile oder einer Matrix angeordnet sind.

4. Opto-elektronische Sensoranordnung nach einem der vorhergehenden Ansprüche,
**dadurch gekennzeichnet,**
**daß** die Änderung des Regelverhaltens durch Aktivierung und Deaktivierung zumindest eines Filters (5) eines Regelkreises (2 - 5) bewirkt wird.

5. Opto-elektronische Sensoranordnung nach Anspruch 4,
**dadurch gekennzeichnet,**
**daß** in den Pausen zwischen der Aussendung der Nutzlichtimpulse ein Filter (5) mit kürzerer Zeitkonstante und während der Aussendung der Nutzlichtimpulse ein Filter (4) mit längerer Zeitkonstante aktiviert wird.

6. Opto-elektronische Sensoranordnung nach Anspruch 6,
**dadurch gekennzeichnet,**
**daß** das Speicherelement (8) während des Nutzlichtimpulsempfangs über einen Schalter (7) mit dem photoempfindlichen Element (1) gekoppelt wird, bzw. daß alle Speicherelemente (8) gleichzeitig mit den ihnen jeweils zugeordneten photoempfindlichen Elementen (1) gekoppelt werden.

7. Opto-elektronische Sensoranordnung nach Anspruch 6 oder 7,
**dadurch gekennzeichnet,**
**daß** das Speicherelement (8) bzw. die Speicherelemente (8) mit einer während der Pausen zwischen der Aussendung der Nutzlichtimpulse aktivierbaren Rücksetzschaltung (9) gekoppelt ist bzw. sind.

8. Opto-elektronische Sensoranordnung nach einem der Ansprüche 6 bis 8,
**dadurch gekennzeichnet,**
**daß** das Speicherelement (8) über einen insbesondere adressierbaren Schalter (10, 10') mit einem Sample-und-Hold-Glied (12), einer Komparatorschaltung oder einem A/D-Wandler verbindbar ist.

9. Opto-elektronische Sensoranordnung nach Anspruch 6,
**dadurch gekennzeichnet,**
**daß** der Schwellwert der Komparatorschaltung wiederholt und insbesondere im Rahmen eines Teach-Vorgangs verstellt wird.

10. Opto-elektronische Sensoranordnung nach einem der Ansprüche 2 bis 10,
**dadurch gekennzeichnet,**
**daß** alle photoempfindlichen Elemente (1) der Lichtempfängereinheit auf einem einzigen Chip angeordnet sind, und/oder daß alle Schaltungen zur Fremdlichtunterdrückung (2) bis (12) auf dem selben Chip angeordnet sind wie die ihnen zugeordneten photoempfindlichen Elemente (1).

11. Opto-elektronische Sensoranordnung nach einem der Ansprüche 2 bis 11,
**dadurch gekennzeichnet,**
**daß** die photoempfindlichen Elemente (1) der Lichtempfängereinheit äquidistant voneinander beabstandet oder aneinander angrenzend angeordnet sind.

12. Opto-elektronische Sensoranordnung nach einem der Ansprüche 2 bis 12,
daß den photoempfindlichen Elementen (1) Farbfilter vorgeschaltet sind, die insbesondere in ihrer Durchlaßfrequenz verstellbar sind.

13. Verfahren zum Betrieb einer opto-elektronischen Sensoranordnung nach einem der Ansprüche 2 bis 13,
**dadurch gekennzeichnet,**
**daß** mittels einer Auswerteschaltung die Position, die Bewegung, das Höhenprofil einschließlich eventueller schräger Flanken und/oder der Kontrast eines im Überwachungsbereich befindlichen (18, 27) Objekts ermittelt wird.

14. Verfahren nach Anspruch 14,
**dadurch gekennzeichnet,**
**daß** das Objekt (18, 27) aktiv und insbesondere mit definierter Lichtstärke und/oder mit Licht eines definierten Wellenlängenbereichs beleuchtet wird.

15. Verfahren nach Anspruch 14 oder 15,
**dadurch gekennzeichnet,**
**daß** ein den Überwachungsbereich begrenzender Reflektor (24) ausgesandtes Licht zur Lichtempfängereinheit reflektiert,

16. Verfahren nach Anspruch 16,
**dadurch gekennzeichnet,**
**daß** der den Überwachungsbereich begrenzende Reflektor (24) zur Sensoranordnung (13, 21) ausgerichtet wird, indem der Reflektor (24) bei objektfreiem Überwachungsbereich verschwenkt und/oder verschoben wird, bis alle photoempfindlichen Elemente einen Lichtempfang signalisieren.

17. Verfahren nach einem der Ansprüche 14 bis 17,
**dadurch gekennzeichnet,**
**daß** der Sensor nach dem Lichtschnittverfahren zur Ermittlung des Vorhandenseins, der Position, der Größe, der Höhe und/oder des Gesamtprofils eines Objektes (18) betrieben wird.

18. Verwendung einer Vorrichtung oder eines Verfahrens nach einem der Ansprüche 2 bis 18 zur Regelung des Durchhangs eines insbesondere flexiblen Objektes (27), oder zur Ermittlung des Abstandes zwischen zwei insbesondere auf einem Fördermittel transportierten Objekten, oder zur Ermittlung der Breite, Länge oder Größe eines insbesondere auf einem Fördermittel transportierten Objektes, oder zur Überwachung eines stationären Zustands, insbesondere der Position von einem oder mehreren Objekten, oder zur Erkennung eines oder mehrerer Objekte oder Objektmerkmale anhand ihrer Reflektivität, ihrer Form, ihrer Abmessungen und/oder ihrer Kontur, oder zur Erkennung eines ein- oder zweidimensionalen Codes, insbesondere eines Barcodes oder einer Schrift.

## Claims

1. Optoelectronic sensor arrangement comprising a light transmitter for the transmission of sequential operational light pulses into a monitored region and a light receiver unit for the reception of operational light pulses reflected from an object located in the monitored region, wherein the light receiver unit includes a photosensitive element (1), with which a circuit for the suppression of outside light is associated which has a regulated energy source which is connected to the photosensitive element (1) and which supplies the current corresponding to the outside light component, with the regulation of the energy source (2) being switched on in the pauses between the transmission of the operational light pulses and being switched off during the transmission of the operational light pulses or the regulation being varied at the times of the transmission of the operational light pulse relative to the regulation in the pauses between the transmission of the operational light pulses, **characterized in that** the circuit for the suppression of outside light has a memory element which supplies the current corresponding to the operational light component through the photosensitive element and stores a charge corresponding to the operational light component, with said memory element in particular being formed as a capacitor.

2. Optoelectronic sensor arrangement in accordance with claim 1, **characterized in that** the light receiver unit includes at least two photosensitive elements (1), with a circuit for the suppression of outside light in accordance with claim 1 being associated with each photosensitive element (1).

3. Optoelectronic sensor arrangement in accordance with claim 2, **characterized in that** a plurality of photosensitive elements (1) are arranged in a row or in a matrix.

4. Optoelectronic sensor arrangement in accordance with any one of the preceding claims, **characterized in that** the change of the regulating behavior is brought about by activation and deactivation of at least one filter (5) of a regulating circuit (2-5).

5. Optoelectronic sensor arrangement in accordance with claim 4, **characterized in that** a filter (5) with a shorter time constant is activated in the pauses between the transmission of the operational light pulses and a filter (4) with a longer time constant is activated during the transmission of the operational light pulses.

6. Optoelectronic sensor arrangement in accordance with any one of the preceding claims, **characterized in that** the storage element (8) is coupled via a switch (7) to the photosensitive element (1) during the reception of the operational light pulses or **in that** all storage elements (8) are simultaneously coupled to the photosensitive elements (1) respectively associated with them.

7. Optoelectronic sensor arrangement in accordance with any one of the preceding claims, **characterized in that** the storage element (8) or the storage elements (8) is or are coupled to a reset circuit (9) which can be activated during the pauses between the transmission of the operational light pulses.

8. Optoelectronic sensor arrangement in accordance with any one of the preceding claims, **characterized in that** the storage element (8) can be connected via a switch, in particular via an addressable switch (10, 10'), to a sample-and-hold member (12), to a comparator circuit or to an A/D-converter.

9. Optoelectronic sensor arrangement in accordance with claim 8, **characterized in that** the threshold value of the comparator circuit is repeatedly adjusted, in particular in the context of a teaching procedure.

10. Optoelectronic sensor arrangement in accordance with any one of claims 2 to 9, **characterized in that** all photosensitive elements (1) of the light receiver unit are arranged on a single chip; and/or **in that** all circuits for the suppression of outside light (2) to (12) are arranged on the same chip as the photosensitive elements (1) associated with them.

11. Optoelectronic sensor arrangement in accordance with any one of claims 2 to 10, **characterized in that** the photosensitive elements (1) of the light receiver unit are spaced equidistanly from one another or are arranged bordering on one another.

12. Optoelectronic sensor arrangement in accordance with any one of claims 2 to 11, **characterized in that** the color filters, in particular color filters of adjustable transmission frequency, are provided in front of the photosensitive elements (1).

13. Method for the operation of an optoelectronic sensor arrangement in accordance with any one of claims 2 to 12, **characterized in that** the position, the movement, the vertical profile including any possibly oblique flanks and/or the contrast of an object located in the monitored region (18, 27) are determined by means of an evaluation circuit.

14. Method in accordance with claim 13, **characterized in that** the object (18, 27) is actively illuminated, in particular with a defined light intensity and/or with light of a defined wavelength range.

15. Method in accordance with claim 13 or claim 14, **characterized in that** a reflector (24) bounding the monitored region reflects transmitted light to the light receiver unit.

16. Method in accordance with claim 15, **characterized in that** the reflector (24) which bounds the monitored region is aligned relative to the sensor arrangement (13, 21) **in that** the reflector (24) is pivoted and/or shifted while the monitored region is object free until all the photosensitive elements signalize reception of light.

17. Method in accordance with any one of claims 13 to 16, **characterized in that** the sensor is operated in accordance with the light intersect method for the determination of the presence, the position, the size, the height and/or the overall profile of an object (18).

18. Use of an apparatus or of a method in accordance with any one of claims 2 to 17 for the regulation of the catenary deflection of an object, in particular of a flexible object (27), or for the determination of the distance between two objects, in particular two objects transported on a conveyor means, or for the determination of the width, length or size of an object, in particular an object transported on a conveyor means, or for the monitoring of a stationary state, in particular of the position of one or more objects, or for the recognition of one or more objects or of object features with respect to their reflectivity, their shape, their dimensions and/or their contour, or for the recognition of one or two dimensional codes, in particular of a bar code or of a script.

## Revendications

1. Agencement capteur optoélectronique comprenant un émetteur de lumière pour émettre des impulsions de lumière utile successives dans une zone à surveiller et une unité réceptrice de lumière pour recevoir les impulsions de lumière utile réfléchies par un objet qui se trouve dans la zone à surveiller, dans lequel l'unité réceptrice de lumière comprend un élément photosensible (1) auquel est associé un circuit de suppression de lumière extérieure, lequel comprend une source d'énergie régulée reliée à l'élément photosensible (1) qui délivre le courant correspondant à la proportion de lumière extérieure, la régulation de la source d'énergie (2) étant enclenchée dans les pauses entre l'émission des impulsions de lumière utile et coupée pendant l'émission des impulsions de lumière utile, ou la régulation étant modifiée pendant les périodes d'émission des impulsions de lumière utile par rapport à la régulation pendant les pauses entre l'émission des impulsions de lumière utile,
**caractérisé en ce que** le circuit de suppression de lumière extérieure comprend un élément accumulateur (8) qui fournit à travers l'élément photosensible le courant correspondant à la proportion de lumière utile et qui accumule une charge électrique correspondant à la proportion de lumière utile, ledit élément accumulateur étant réalisé en particulier sous forme d'un condensateur.

2. Agencement capteur optoélectronique selon la revendication 1, **caractérisé en ce que** l'unité réceptrice de lumière comprend au moins deux éléments photosensibles (1), et dans lequel un circuit de suppression de lumière extérieure respectif selon la revendication 1 est associé à chaque élément photosensible (1).

3. Agencement capteur optoélectronique selon la revendication 2, **caractérisé en ce qu'**une pluralité d'éléments photosensibles (1) sont agencés suivant une ligne ou une matrice.

4. Agencement capteur optoélectronique selon l'une des revendications précédentes, **caractérisé en ce que** la modification du comportement de régulation est réalisée par activation et désactivation d'au moins un filtre (5) d'un circuit de régulation (2 - 5).

5. Agencement capteur optoélectronique selon la revendication 4, **caractérisé en ce que** pendant les pauses entre l'émission des impulsions de lumière utile, un filtre (5) avec une courte constante de temps est activé, et pendant l'émission des impulsions de lumière utile un filtre (4) avec une longue constante de temps est activé.

6. Agencement capteur optoélectronique selon l'une des revendications précédentes, **caractérisé en ce que** l'élément accumulateur (8) est couplé pendant la réception des impulsions de lumière utile avec l'élément photosensible (1) via un commutateur (7), ou respectivement **en ce que** tous les éléments accumulateurs (8) sont simultanément couplés avec les éléments photosensibles (1) qui leur sont respectivement associés.

7. Agencement capteur optoélectronique selon selon l'une des revendications précédentes, **caractérisé en ce que** l'élément accumulateur (8), ou les éléments accumulateur (8), est/sont couplé(s) au moyen d'un circuit de remise à zéro (9) susceptible d'être activé pendant les pauses entre l'émission des impulsions de lumière utile.

8. Agencement capteur optoélectronique selon selon l'une des revendications précédentes, **caractérisé en ce que** l'élément accumulateur (8) est susceptible d'être relié via un commutateur (10, 10'), en particulier adressable, à un circuit d'échantillonnage et de maintien (12), à un circuit comparateur, ou à un convertisseur analogique/numérique.

9. Agencement capteur optoélectronique selon la revendication 8, **caractérisé en ce que** la valeur seuil du circuit comparateur est modifiée de façon répétée, et en particulier dans le cadre d'un processus d'apprentissage.

10. Agencement capteur optoélectronique selon l'une des revendications 2 à 9, **caractérisé en ce que** tous les éléments photosensibles (1) de l'unité réceptrice de lumière sont agencés sur une puce unique et/ou **en ce que** tous les circuits de suppression de lumière extérieure (2 à 12) sont agencés sur la même puce que les éléments photosensibles (1) qui leur sont associés.

11. Agencement capteur optoélectronique selon l'une des revendications 2 à 10, **caractérisé en ce que** les éléments photosensibles (1) de l'unité réceptrice de lumière sont agencés écartés les uns des autres de manière équidistante, ou adj acents les uns aux autres.

12. Agencement capteur optoélectronique selon l'une des revendications 2 à 11, **caractérisé en ce que** des filtres chromatiques sont branchés en amont des éléments photosensibles (1), lesdits filtres étant réglables en particulier quant à leur fréquence de passage.

13. Procédé de fonctionnement d'un agencement capteur optoélectronique selon l'une des revendications 2 à 12, **caractérisé en ce que**, au moyen d'un circuit d'évaluation, on détermine la position, le déplacement, le profil en hauteur y compris d'éventuels flancs obliques et/ou le contraste d'un objet (18, 27) qui se trouve dans la zone à surveiller.

14. Procédé selon la revendication 13, **caractérisé en ce que** l'objet (18, 27) est éclairé de manière active et en particulier avec une intensité lumineuse définie et/ou avec une lumière dans une plage de longueur d'onde définie.

15. Procédé selon l'une ou l'autre des revendications 13 et 14, **caractérisé en ce qu'**un réflecteur (24) qui délimite la zone à surveiller réfléchit la lumière émise vers l'unité réceptrice de lumière.

16. Procédé selon la revendication 15, **caractérisé en ce que** le réflecteur (24) qui délimite la zone à surveiller est dirigé vers l'agencement capteur (13, 21), en basculant et/ou en déplaçant le réflecteur (24) tandis que la zone à surveiller est dépourvue d'objet, jusqu'à ce que tous les éléments photosensibles signalisent la réception d'une lumière.

17. Procédé selon l'une des revendications 13 à 16, **caractérisé en ce que** le capteur fonctionne suivant le procédé à coupure de lumière pour déterminer la présence, la position, la taille, la hauteur et/ou le profil global d'un objet (18).

18. Application d'un dispositif ou d'un procédé selon l'une des revendications 2 à 17 à la régulation de la flexion d'un objet (27), en particulier flexible, ou à la détermination de la distance entre deux objets, en particulier transportés sur un moyen de convoyage, ou à la détermination de la largeur, de la longueur ou de la taille d'un objet, en particulier transporté sur un moyen de convoyage, ou à la surveillance d'un état stationnaire, en particulier de la position d'un ou de plusieurs objets, ou à la reconnaissance d'un ou de plusieurs objets, ou de caractéristiques d'un objet à l'aide de leur réflectivité, de leur forme, de leurs dimensions et/ou de leurs contours, ou à la reconnaissance d'un code mono-dimensionnel ou bi-dimensionnel, en particulier d'un code à barres ou d'une écriture.
